# EUROPEAN PATENT SPECIFICATION

(11) **EP 1 454 737 B1**
(45) Date of publication and mention of the grant of the patent: **05.09.2007**
(21) Application number: 04251247.5
(22) Date of filing: 03.03.2004
(51) Int. Cl.: B32B 5/12, B32B 15/08, B32B 5/28

(54) **Composite material and method of manufacturing the same**
Verbundwerkstoff und Verfahren zur Herstellung desselben
Matériau composite et procédé de sa fabrication

(30) Priority: 04.03.2003 JP 2003057204
(43) Date of publication of application: 08.09.2004
(73) Proprietor: FUJI JUKOGYO KABUSHIKI KAISHA, Tokyo-To (JP)
(72) Inventor: Ogisu, Toshimichi, c/o Fuji Jukogyo Kabushiki K., Shinjuku-ku Tokyo-to (JP)
(74) Representative: W.P. Thompson & Co.

(56) References cited:
- US-A- 5 614 305
- US-B1- 6 655 218
- DATABASE WPI Section Ch, Week 200113 Derwent Publications Ltd., London, GB; Class J04, AN 2001-115633 XP002287507 & JP 2000 334888 A (FUJI HEAVY IND LTD) 5 December 2000 (2000-12-05) & PATENT ABSTRACTS OF JAPAN vol. 2000, no. 15, 6 April 2001 (2001-04-06) & JP 2000 334888 A (FUJI HEAVY IND LTD), 5 December 2000 (2000-12-05)

## Description

### Background of the Invention

### Field of the Invention

The present invention relates to a fiber-reinforced composite material and a method of manufacturing the same. More particularly, it pertains to a fiber-reinforced composite material incorporating therein a shape-memory alloy to which a permanent strain is previously imparted.

### Related Art

In recent years, a composite material used as a structural material for a future aircraft and high-speed vehicle has been consecutively developed, and a composite material of light weight and high strength has been proposed.

For example, a composite material has been proposed (see, Japanese Patent Laid-Open Publication No. 2000-334888) in which a shape-memory alloy foil to which a strain is previously imparted at room temperature is buried in a CFRP (Carbon Fiber Reinforced Plastic) composite material laminate board, and the shape-memory alloy foil is electrified or heated from outside, so that a damaged region can be repaired by utilizing a shape recovery function of the shape-memory alloy foil as a damage suppression function.

The composite material described in Japanese Patent Laid-Open Publication No. 2000-334888 includes the shape-memory alloy foil arranged between composite carbon fiber (hereinafter referred to as CFRP) layers, with the number of the CFRP layers being two. In such a composite material, a ratio of the volume of the shape-memory alloy foil with respect to the overall volume of the composite material is relatively high. In addition, the shape-memory alloy foil has a higher density than that of the CFRP. Thus, a further weight reduction of the composite material is inhibited.

### Summary of the Invention

The present invention is made in view of the above disadvantage. An object of the present invention is to provide a composite material and a method of manufacturing the same, in which a weight of the composite material is reduced, while the strength thereof is improved to provide a higher damage suppression effect.

In order to achieve the above object, a composite material, according to the first aspect of the present invention, comprises: a fiber-reinforced resin layer part including a plurality of fiber-reinforced resin layers in different fiber arrangement directions, the layers being laminated with each other; a metal layer made of a structural metal material, which is disposed between the fiber-reinforced resin layer parts; and a resin layer which attaches the metal layer and the fiber-reinforced resin layer part to each other.

Herein, the structural metal material means a metal which has a strength sufficient for its use as a structural material of a structure. Since a required strength is varied according to a structure, a metal material to be used for a metal layer may also be changed.

According to the first aspect of the present invention, the resin layer not only contributes to improving a damage generating strain of the composite material, but also enhances an attachment between the metal layer and the fiber-reinforced resin layer part. Therefore, the composite material can be more firmly integrated. As a result, as compared with a conventional composite material, a damage suppression effect can be increased.

In a composite material according to the second aspect of the present invention, the metal layer may be made of a shape-memory alloy, and the resin layer and the fiber-reinforced resin layer part may be laminated on the metal layer to which a strain is previously imparted.

According to the second aspect of the present invention, when the metal layer formed of a shape-memory alloy recovers its original shape, the resin layer and the fiber-reinforced resin layer part, which are laminated on the metal layer, are subjected to a recovering force of the metal layer at the same time. Thus, upon a recovery of the metal layer, the recovering force is applied to the resin layer and the fiber-reinforced resin layer part. In the case where an external force is applied in an opposite direction of the recovering force, the external force is counterbalanced by the recovering force. Therefore, a critical stress at which a damage is generated in each layer can be raised.

In a composite material, according to the third aspect of the present invention, the fiber-reinforced resin layer part may be composed of n sheets of fiber-reinforced resin layers, and the fiber-reinforced resin layers may be laminated such that a minimum angle between the fiber-reinforced resin layers in a fiber arrangement direction is 180/n degrees.

According to the third aspect of the present invention, the respective layers of the fiber-reinforced resin layer part are arranged at a uniform angle depending on the number of layers to be laminated. Thus, such a fiber-reinforced resin layer part can provide a strength in the most uniform manner. That is, fiber reinforced resin layer part is not strengthened in only a certain direction, so that a suitable structure of the composite material is made possible.

In a composite material, according to the fourth aspect of the present invention, the fiber-reinforced resin layer part may include: a first fiber-reinforced resin layer in which fibers are arranged to extend perpendicular to a certain direction of the metal layer; a second fiber-reinforced resin layer laminated on the first fiber-reinforced resin layer, in which fibers are arranged to extend at an angle of -45 degrees relative to the certain direction of the metal layer; a third fiber-reinforced resin layer laminated on the second fiber-reinforced resin layer, in which fibers are arranged to extend along the certain direction of the metal layer; and a fourth fiber-reinforced resin layer laminated on the third fiber-reinforced resin layer, in which fibers are arranged to extend at an angle of 45 degrees relative to the certain direction of the metal layer.

Herein, the certain direction means a direction in which load is mainly applied to the composite material.

According to the fourth aspect of the present invention, since the first to fourth fiber-reinforced resin layers are respectively arranged at an angle of 45 degrees, the fiber-reinforced resin layer part is strengthened in four directions. Thus, such a fiber-reinforced resin layer part composed of four layers can provide a strength in the most uniform manner, That is, the fiber-reinforced resin layer part is not strengthened in only a certain direction, so that a suitable structure of the composite material is made possible.

A method of manufacturing a composite material, according to the fifth aspect of the present invention, comprises the steps of: imparting a strain to a shape-memory alloy foil; laminating a resin layer on each surface of the shape-memory alloy foil; laminating a plurality of uncured fiber-reinforced resin layers on the resin layer; securing both ends of the shape-memory alloy foil to prevent a length of the foil from being changed; and heating the shape-memory alloy foil to cure the resin layer and the fiber-reinforced resin layers.

According to the fifth aspect of the present invention, when the shape-memory alloy foil is heated to recover its original shape, the resin layer and the fiber-reinforced resin layers, which are laminated on the shape-memory alloy foil, are subjected to a recovering force of the shape-memory alloy foil at the same time. Thus, upon a recovery of the shape-memory alloy foil, the recovering force is applied to the resin layer and the fiber-reinforced resin layers. In the case where an external force is applied in an opposite direction of the recovering force, the external force is counterbalanced by the recovering force. Therefore, a critical stress at which a damage is generated in each layer can be raised.
By way of example only, a specific embodiment of the present invention will now be described with reference to the accompanying drawings, in which:-
Fig. 1 is a perspective view of a composite material according to the present invention;
Fig. 2(a) is a plan view of a test piece;
Fig. 2(b) is a side view of the test piece;
Fig. 3 is a view illustrating a manufacture of the composite material;
Fig. 4 is a graph showing a comparison of damage properties of test pieces having different laminate structures;
Fig. 5 is a graph showing relationships of load strains and damage properties of test pieces having different laminate structures;
Fig. 6 is a graph showing a comparison of damage properties of test pieces having different laminate structures;
Fig. 7 is a view illustrating a process of generating a transverse crack and a delamination in a conventional composite material; and
Fig. 8 is a view illustrating a process of generating a transverse crack and a delamination in the composite material according to the present invention.

### Detailed Description of the Invention

An embodiment of a composite material and a method of manufacturing the same according to the present invention is described below in detail.

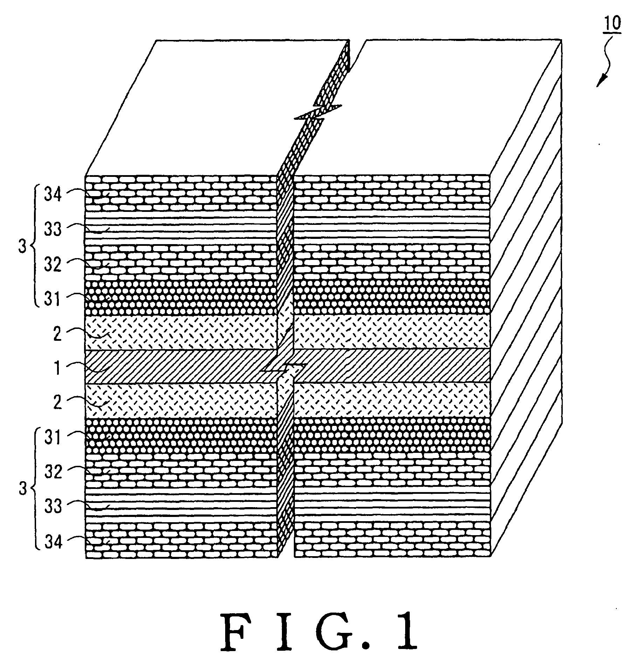

As shown in Fig. 1, a composite material 10 includes a metal layer 1 formed of a structural metal material, a resin layer 2 laminated on each surface of the metal layer 1, and a fiber-reinforced resin layer part 3 having a plurality of fiber-reinforced resin layers 31 to 34 which are laminated on the resin layer 2.

The metal layer 1 is formed of a shape-memory alloy as a structural metal material. Herein, a Ti-50.2% Ni shape-memory alloy (hereinafter referred to as SMA) is used, for example. The SMA will recover to an original crystal structure by being heated.

The resin layer 2 is interposed between the metal layer 1 and the fiber-reinforced resin layer part 3. The resin layer 2 improves an adhesive strength between the metal layer 1 and the fiber-reinforced resin layer part 3, as well as enhancing the strength of the composite material 10. Herein, an epoxy-based resin adhesive film is used, for example.

The fiber-reinforced resin layer part 3 includes the first fiber-reinforced resin layer 31, the second fiber-reinforced resin layer 32, the third fiber-reinforced resin layer 33, and the fourth fiber-reinforced resin layer 34. In the first fiber-reinforced resin layer 31, fibers are arranged to extend perpendicular to a direction in which load is mainly applied to the metal layer 1 (a transverse direction to the plane of the drawing of Fig. 1). In the second fiber-reinforced resin layer 32 laminated on the first fiber-reinforced resin layer 31, fibers are arranged to extend at an angle of -45° relative to a direction in which load is mainly applied to the metal layer 1. In the third fiber-reinforced resin layer 33 laminated on the second fiber-reinforced resin layer 32, fibers are arranged to extend along a direction in which load is mainly applied to the metal layer 1. In the fourth fiber-reinforced resin layer 34 laminated on the third fiber-reinforced resin layer 33, fibers are arranged to extend at an angle of 45° relative to a direction in which load is mainly applied to the metal layer 1. Herein, carbon fibers can be used for forming each fiber-reinforced resin layer, for example.

### Examples

The composite material 10 and a method of manufacturing the same are described hereinbelow with reference to the examples.

### [Manufacturing method of Test Pieces]

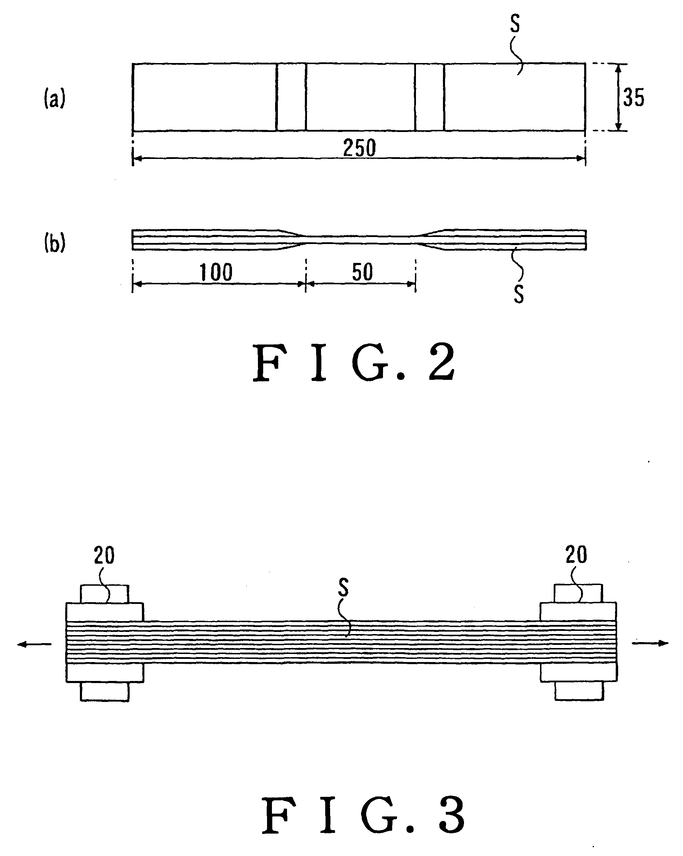

In this test, two SMA foils 0.04 mm thick and 0.1 mm thick were used as the metal layer 1. Fig. 2 shows a configuration of test piece S. The dimension of the test piece S was 250 mm in length, 35 mm in width, about 1.6 mm in thickness when made of the fiber-reinforced resin layer part 3 only, and about 1.85 mm to about 1.95mm in thickness when the metal layer 1 is disposed therein. The SMA used as the metal layer 1 was obtained by the following steps.

In order to improve an adhesive property, the SMA that is used as a metal layer 1 of the materials shown in Table 1, is cleaned with 3% hydrofluoric acid - 15% nitric add to remove the oxide film on its surface formed during hot rolling process. After the surface of the SMA was roughened, the SMA was subjected to an anodic treatment by using 10% NaOH so as to generate a new oxide film. When the test piece S is formed, the surface of the SMA was completely cleaned with a solvent. Then, as shown in Fig. 3, the resin layer 2 and the fiber-reinforced resin layer part 3 were laminated by using a special jig 20 which can arrest a strain to be applied to the SMA. The test piece S was exposed to an environment of 180°C for 120 minutes so as to be molded and cured. Thereafter, a tab was attached to the test piece S, and the same was trimmed, so that the finished test piece S shown in Fig. 2 was obtained.

### [Test Method]

The test pieces S used in this test were as follows: only the fiber-reinforced resin layer part 3 (1 kind); the fiber-reinforced resin layer part 3 and the resin layer 2 (1 kind); the fiber-reinforced resin layer part 3, the resin layer 2, and the SMA (1 kind); and the fiber-reinforced resin layer part 3, the resin layer 2, and the SMA to which a 2% strain is imparted (2 kinds). The respective test pieces S were tested under environments at room temperature and at a temperature of 80°C. Thus, the tests were carried out under 10 conditions. Table 1 shows the lamination structures, board thicknesses, SMA volume ratios, and test temperatures of the test pieces S.

As shown in Table 1, test pieces S of A type as a comparative example were formed by laminating only the fiber-reinforced resin layer part 3. The test pieces S of A type included a test piece S of A1 type to be tested at room temperature and a test piece S of A2 type to be tested at a temperature of 80°C. Test pieces S of B type as a first example were formed by laminating the resin layer 2 between the adjacent fiber-reinforced resin layer parts 3. The test pieces S of B type included a test piece S of B1 type to be tested at room temperature and a test piece S of B2 type to be tested at a temperature of 80°C. Test pieces S of C type as a second embodiment were formed by laminating the metal layer 1 of 0.04 mm in thickness between the adjacent fiber-reinforced resin layer parts 3 through the resin layer 2. The test pieces S of C type included a test piece S of C1 type to be tested at room temperature and a test piece S of C2 type to be tested at a temperature of 80°C. Test pieces S of D type as a third example were formed by laminating the metal layer 1 of 0.04 mm in thickness to which a 2% strain had been previously imparted, between the adjacent fiber-reinforced resin layer parts 3 thorough the resin layer 2. The test pieces S of D type included a test piece S of D1 type to be tested at room temperature and test piece S of D2 type to be tested at a temperature of 80°C. Test pieces S of E type were formed by laminating the metal layer 1 of 0.1 mm in thickness to which a 2% strain had been previously imparted, between the adjacent fiber-reinforced resin layer parts 3 through the resin layer 2. The test pieces S of E type included a test piece S of E1 type to be tested at room temperature and a test piece S of E2 type to be tested at a temperature of 80°C.

A loading-unloading test was carried out by using the 10 kinds of test pieces S shown in Fig. 1. The respective test pieces S were set on a tension tester, and a predetermined strain is increasingly loaded from 0.2% to rupture at a loaded strain interval from 0.05% to 0.2%. A strain of each test piece S was measured by a dynamic strain meter based on an output from a strain gauge. Rupture of each test piece S was detected by using a liquid penetrant test.

**[Table 1]**

| | Type | Lamination Structure of Test Piece | Thickness of Test Piece | SMA Volume Ratio | Test Temperature |
|---|---|---|---|---|---|
| Comparative Example | A1 | 45/0/-45/90 | 1.6 | 0 | Room Temperature |
| | A2 | 45/0/-45/90 | 1.6 | 0 | 80°C |
| First Example (Comparative) | B1 | 45/0/-45/90/Ad | 1.85 | 0 | Room Temperature |
| | B2 | 45/0/-45/90/Ad | 1.85 | 0 | 80°C |
| Second Example | C1 | 45/0/-45/90/Ad/SMA (0.04 mm thick)/Ad/90/-45/0/45 | 1.89 | 2.1 | Room Temperature |
| | C2 | 45/0/-45/90/Ad/SMA (0.04 mm thick)/Ad/90/-45/0/45 | 1.89 | 2.1 | 80°C |
| Third Example | D1 | 45/0/-45/90/Ad/SMA (previously imparted a 2% strain, 0.04 mm thick) /Ad/90/-45/0/45 | 1.89 | 2.1 | Room Temperature |
| | D2 | 45/0/-45/90/Ad/SMA (previously imparted a 2% strain, 0.04 mm thick) /Ad/90/-45/0/45 | 1.89 | 2.1 | 80°C |
| Fourth Example | E1 | 45/0/-45/90/Ad/SMA (previously imparted a 2% strain, 0.1 mm thick) /Ad/90/-45/0/45 | 1.95 | 5.1 | Room Temperature |
| | E2 | 45/0/-45/90/Ad/SMA (previously imparted a 2% strain, 0.1 mm thick) /Ad/90/-45/0/45 | 1.95 | 5.1 | 80°C |

### [Transverse Crack Generation]

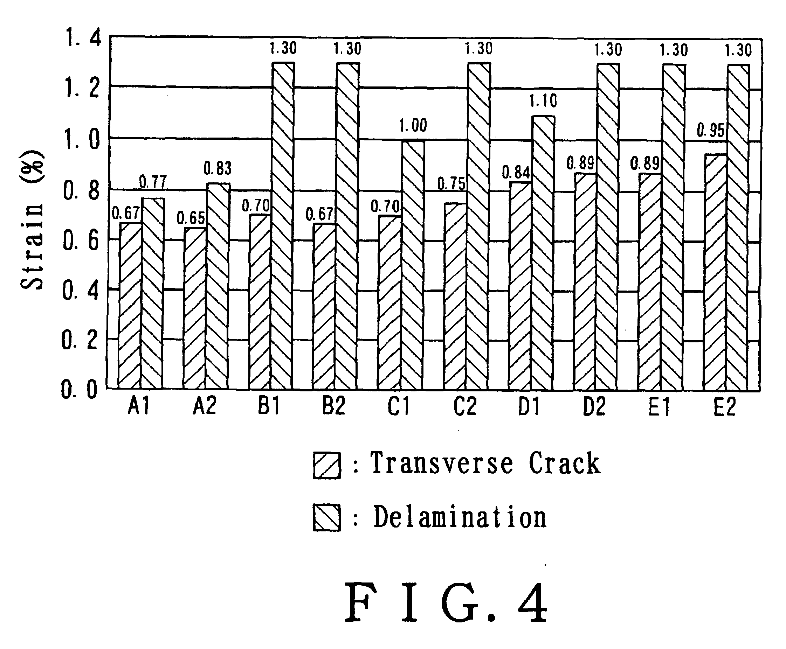

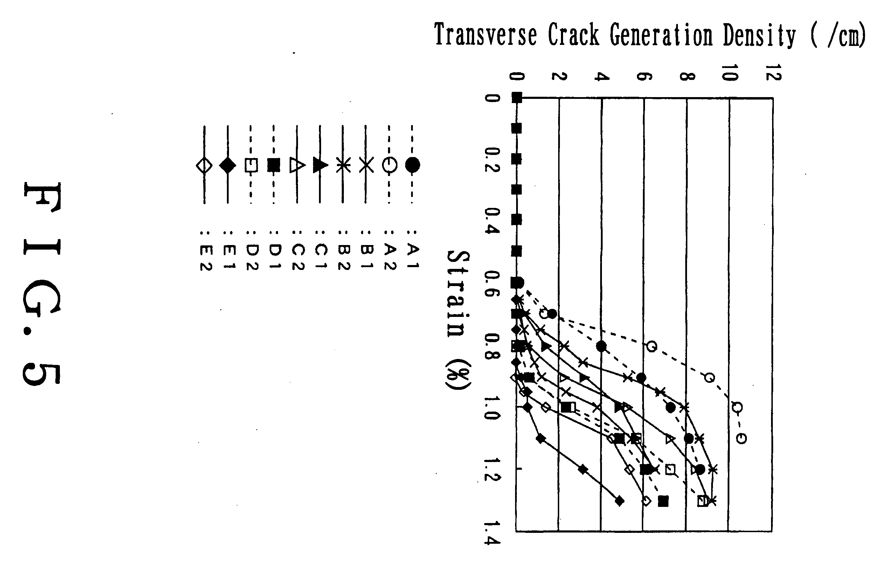

Figs. 4 and 5 show the test results. Based on the test result of A type test pieces, an effect on the resin layer 2 was examined by using the B type test pieces. An effect on the metal layer 1 formed by the SMA was examined by using the C type test pieces. An effect of the 2% strain of the SMA and an effect of restoring force thereof were examined by using the D type test pieces. A damage suppression effect and a recovering property were examined by using the E type test pieces in which the metal layer 1 has 2.5 times thickness.

As shown in Fig. 4, at a 0.67% strain, a transverse crack was generated in the first fiber-reinforced resin layer 31 of the test piece of A1 type, while at a 0.65% strain, a transverse crack was generated in the test piece of A2 type. This difference shows a deterioration in the material property caused by heating. In the test pieces of B type, substantially the same results as those of the test pieces of A type were obtained, and no remarkable difference was found. The test piece of C1 type had a 0.7% crack generation strain at room temperature. However, in the test piece of C2 type, the crack generation strain was improved up to 0.75% by heating. It can be considered that such an effect was brought about due to an improvement in rigidity by an austenite transformation of the SMA. The test piece of D1 type had a 0.84% crack generation strain at room temperature. However, in the test piece of D2 type, the crack generation strain was improved up to 0.89% by heating. The test piece of E1 type had a 0.89% crack generation strain at room temperature. However, in the test piece of E2 type, the crack generation strain was improved up to 0.95% by heating.

Based on the above results, it is found that a provision of the metal layer 1 formed of an SMA improves a transverse crack strain.

When comparing the test pieces of C type in which no strain was imparted to the metal layer 1, with the test pieces of D type in which 2% strain was previously imparted to the metal layer 1, it is found that the transverse crack generation strain is more improved in the latter. When comparing the test pieces of D type in which the metal layer 1 has a thickness of 0.04 mm, with the test pieces of E type in which the metal layer 1 has a thickness of 0.1 mm, it is found that the transverse crack generation strain is more improved in the latter.

As shown in Fig. 5, with respect to the test pieces of A type at a loaded strain of 1.1%, a transverse crack generation density was 8.1/cm in the test piece of A1 type, while it was 10.6/cm in the test piece of A2 type. With respect to the test pieces of B type, a transverse crack generation density was 5.5/cm in the test piece of B1 type, which was about a 30% reduction relative to the test piece of A1 type, while it was 8.6/cm in the test piece of B2 type, which was about a 20% reduction relative to the test piece of A1 type. In the test piece of C1 type, a transverse crack generation density was 5.7/cm, which was about a 30% reduction relative to the test piece of A1 type, while it was 7.3/cm in the test piece of C2 type, which was about a 30% reduction relative to the test piece of A1 type. In the test piece of D1 type, a transverse crack generation density was 4.9/cm, which was about a 40% reduction relative to the test piece of A1 type, while it was 5.6/cm in the test piece of D2 type, which was about a 50% reduction relative to the test piece of A1 type. In the test piece of E1 type, a transverse crack generation density was 1.15/cm, which was about an 86% reduction relative to the test piece of A1 type, while it was 4.55/cm in the test piece of E2 type, which was about a 57% reduction relative to the test piece of A1 type.

Based on the above results, it is found that a composite material having the resin layer 2 laminated on the fiber-reinforced resin layer part 3 has a lower transverse crack generation density than a composite material which is made only of the fiber-reinforced resin layer part 3. It is also found that, by laminating the resin layer 2 and the metal layer 1, a transverse crack generation density can be further decreased. When comparing the test pieces of C type in which no strain was imparted to the metal layer 1, with the test pieces of D type in which 2% strain was previously imparted to the metal layer 1, it is found that a transverse crack generation density is more decreased in the latter. When comparing the test pieces of D type in which the metal layer 1 has a thickness of 0.04 mm, with the test pieces of E type in which the metal layer 1 has a thickness of 0.1 mm, it is found that the transverse crack generation density is lower in the latter.

### [Delamination Generation]

As shown in Fig. 4, a delamination generation strain was 0.77% in the test piece of A1 type, while it was 0.83% in the test piece of A2 type. With respect to the test pieces of B type, the delamination generation strain was significantly improved relative to the test piece of A1 type. That is, no delamination was generated in both the test pieces of B1 and B2 types when the strain exceeded 1.2%. In Fig. 4, about the cases in which no delamination is generated at above 1.2% strain, the delamination generation strain is specified as 1.3%, as a matter of convenience. Although the delamination generation strain was lowered to 1% in the test piece of C1 type, it was 1 3% in the test piece of C2 type. The delamination generation strain was improved to 1.1% in the test piece of D1 type, and it was 1.3% in the test piece of D2 type. The delamination generation strain was 1.3% both in the test pieces of E1 and E2 types. Thus, no delamination was generated at a loaded strain of 1.2%.

Based on the above results, it is found that the delamination generation strain is more improved in a composite material in which the resin layer 2 and the metal layer 1 are laminated than in a composite material which is made only of the fiber-reinforced resin layer part 3. When comparing the test pieces of C type in which no strain was imparted to the metal layer 1, with the test pieces of D type in which 2% strain was previously imparted to the metal layer 1, it is found that the delamination generation strain is more improved in the latter. When comparing the test pieces of D type in which the metal layer 1 has a thickness of 0.04 mm, with the test pieces of E type in which the metal layer 1 has a thickness of 0.1 mm, it is found that the delamination generation strain is more improved in the latter.

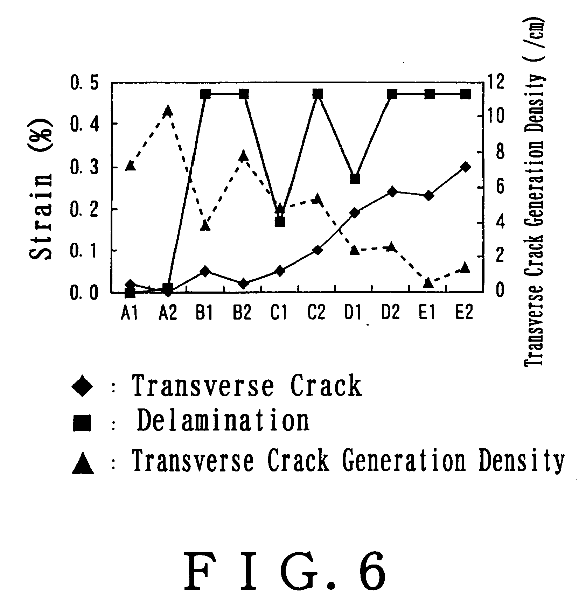

Fig. 6 shows a summary of the above results. Based on Fig. 6, it is found that the test pieces S of D type and the test pieces of E type have a higher damage suppression effect, each of which is made by the metal layer 1 formed of the SMA to which a strain is previously imparted, the resin layer 2, and the fiber-reinforced resin layer part 3. Of the two kinds of test pieces S having such a structure, the test pieces S of E type, in which a thickness of the SMA is 0.1 mm, is more preferable.

The test pieces S are compared with a conventional composite material 10 with reference to an observation by using a video scope.

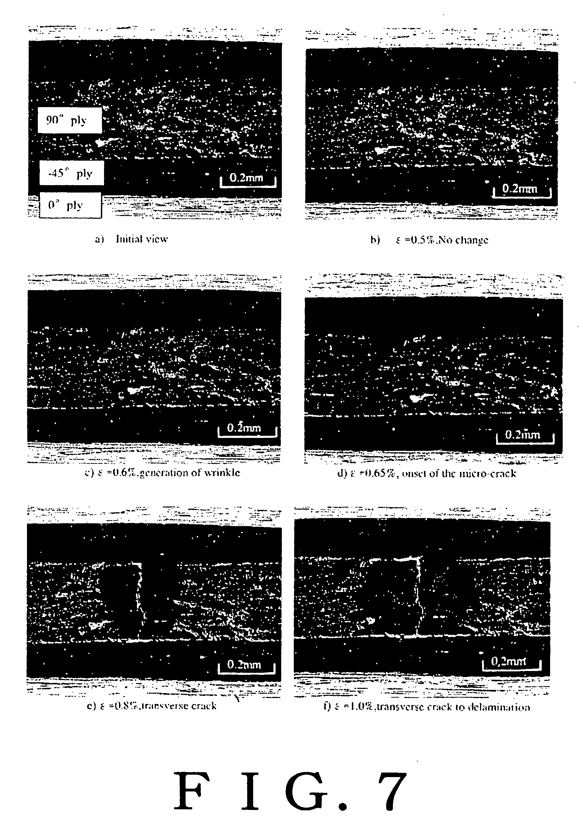

As shown in Fig. 7, in the test pieces S of A type, a transverse crack is generated at a loaded strain of 0.65%. At a loaded strain of 0.8%, the transverse crack passes vertically through the 90 degrees layer, and becomes a delamination. At a loaded strain of 1.0%, a clear delamination is observed.

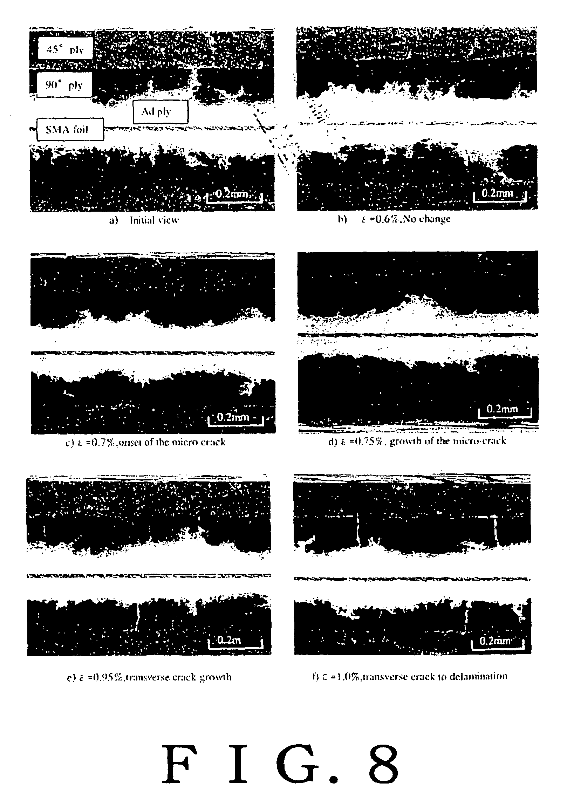

On the other hand, as shown in Fig. 8, in the test pieces S of C type having the metal layer 1, the resin layer 2, and the fiber-reinforced resin layer part 3, the transverse crack is generated at a loaded strain of 0.75%. At a loaded strain of 0.9%, the transverse crack passes vertically through the 90 degrees layer, and the delamination is generated at a loaded strain of 1.0%.

Based on the above results, it is found that, as compared with the conventional composite material, damage can be significantly suppressed by laminating the resin layer 2 and the fiber-reinforced resin layer part 3 on the metal layer 1 formed of the SMA to which a strain is previously imparted, and heating the metal layer 1 to recover its original shape.

Thus, in the composite material 10 and the method of manufacturing the composite material 10 according to the present embodiment, the resin layer 2 not only contributes to improving the strength of the composite material 10, but also enhances an attachment between the metal layer 1 and the fiber-reinforced resin layer part 3. Therefore, the composite material 10 can be more firmly integrated, so that the strength thereof can be improved. As a result, as compared with a conventional composite material, a damage suppression effect can be increased.

Since the metal layer 1 is formed of the SMA, when the metal layer 1 is heated to recover its original shape, the resin layer 2 and the fiber-reinforced resin layer part 3, which are laminated on the metal layer 1, are subjected to the recovering force of the metal layer 1 at the same time. Thus, upon a recovery of the metal layer 1, the recovering force is applied to the resin layer 2 and the fiber-reinforced resin layer part 3. In the case where an external force is applied in an opposite direction of the recovering force, the external force is counterbalanced by the recovering force. Therefore, a critical stress at which a damage is generated in each layer can be enhanced.

Since the first to fourth fiber-reinforced resin layers 31 to 34 are respectively arranged at an angle of 45 degrees, the fiber-reinforced resin layer part 3 is strengthened in four directions. Thus, such a fiber-reinforced resin layer part 3 composed of four layers can provide a strength in the most uniform manner. That is, the fiber-reinforced resin layer part 3 is not strengthened in only a certain direction, so that a suitable structure of the composite material 10 is made possible.

The present invention is not limited to the above embodiment. For example, although the fiber-reinforced resin layer part 3 is composed of four layers, it may be composed of six or eight layers. In the case of six layers, the first to sixth fiber-reinforced resin layers are respectively arranged at an angle of 30°. In the case of eight layers, the first to eighth fiber-reinforced resin layers are respectively arranged at an angle of 22.5 degrees. In this embodiment, the SMA used as the metal layer 1 would recover by being heated. However, not limited thereto, the SMA may recover with a lapse of time. Other changes and modifications are possible without departing from the scope of the invention.

That is, according to the present invention, a resin layer not only contributes to improving the strength of a composite material, but also enhances an attachment between a metal layer and a fiber-reinforced resin layer. Thus, the composite material can be more firmly integrated, so that the strength thereof can be improved. Therefore, an increased damage suppression effect of the composite material can be obtained relative to a conventional one.

Further, the disclosure of Japanese Patent Application No. 57204/2003 filed on March 4, 2003 including the specification, drawings and abstract is incorporated by reference in its entirety.

## Claims

1. A composite material comprising
a fiber-reinforced resin layer part including a plurality of fiber-reinforced resin layers in different fiber arrangement directions, the layers being laminated with each other;
a metal layer made of a structural metal material, which is disposed between the fiber-reinforced resin layer parts; and
a resin layer which attaches the metal layer and the fiber-reinforced resin layer part to each other.

2. A composite material according to Claim 1, wherein
the metal layer is made of shape-memory alloy; and
the resin layer and the fiber-reinforced resin layer part are laminated on the metal layer to which a strain is previously imparted.

3. A composite material according to Claim 1, wherein
the fiber-reinforced resin layer part includes n sheets of fiber-reinforced resin layers; and
the fiber-reinforced resin layers are laminated such that a minimum angle between the fiber-reinforced resin layers in a fiber arrangement direction is 180/n degrees.

4. A composite material according to Claim 2, wherein
the fiber-reinforced resin layer part includes n sheets of fiber-reinforced resin layers; and
the fiber-reinforced resin layers are laminated such that a minimum angle between the fiber-reinforced resin layers in a fiber arrangement direction is 180/n degrees.

5. A composite material according to Claim 1, wherein the fiber-reinforced resin layer part includes:
a first fiber-reinforced resin layer in which fibers are arranged to extend perpendicular to a certain direction of the metal layer
a second fiber-reinforced resin layer laminated on the first fiber-reinforced resin layer, in which fibers are arranged to extend at an angle of -45 degrees relative to a certain direction of the metal layer;
a third fiber-reinforced resin layer laminated on the second fiber-reinforced resin layer, in which fibers are arranged to extend along a certain direction of the metal layer; and
a fourth fiber-reinforced resin layer laminated on the third fiber-reinforced resin layer, in which fibers are arranged to extend at an angle of 45 degrees relative to a certain direction of the metal layer.

6. A composite material according to Claim 2, wherein the fiber-reinforced resin layer part includes:
a first fiber-reinforced resin layer in which fibers are arranged to extend perpendicular to a certain direction of the metal layer;
a second fiber-reinforced resin layer laminated on the first fiber-reinforced resin layer, in which fibers are arranged to extend at an angle of -45 degrees relative to a certain direction of the metal layer;
a third fiber-reinforced resin layer laminated on the second fiber-reinforced resin layer, in which fibers are arranged to extend along a certain direction of the metal layer; and
a fourth fiber-reinforced resin layer laminated on the third fiber-reinforced resin layer, in which fibers are arranged to extend at an angle of 45 degrees relative to a certain direction of the metal layer.

7. A composite material according to claim 3 or claim 4, wherein the fiber-reinforced resin layer part includes:
a first fiber-reinforced resin layer in which fibers are arranged to extend perpendicular to a certain direction of the metal layer;
a second fiber-reinforced resin layer laminated on the first fiber-reinforced resin layer, in which fibers are arranged to extend at an angle of -45 degrees relative to a certain direction of the metal layer;
a third fiber-reinforced resin layer laminated on the second fiber-reinforced resin layer, in which fibers are arranged to extend along a certain direction of the metal layer; and
a fourth fiber-reinforced resin layer laminated on the third fiber-reinforced resin layer, in which fibers are arranged to extend at an angle of 45 degrees relative to a certain direction of the metal layer.

8. A method of manufacturing a composite material which comprises:
imparting a strain to a shape-memory alloy foil;
laminating a resin layer on each surface of the shape-memory alloy foil;
laminating a plurality of uncured fiber-reinforced resin layers on the resin layer;
securing both ends of the shape-memory alloy foil to prevent a length of the foil from being changed; and
heating the shape-memory alloy foil to cure the resin layer and the fiber-reinforced resin layers.

## Patentansprüche

1. Verbundmaterial, enthaltend:
ein faserverstärktes Harzschichtteil mit mehreren faserverstärkten Harzschichten mit unterschiedlichen Richtungen von Fasseranordungen, wobei die Schichten schichtweise aneinander gefügt sind,
eine Metallschicht aus Konstruktionsmetall, die zwischen den faserverstärkten Harzschichtteilen angeordnet ist und
eine Harzschicht, die die Metallschicht und die faserverstärkten Schichtteile miteinander Verbindet.

2. Verbundmaterial nach Anspruch 1, wobei
die Metallschicht aus einer Formgedächtnis-Legierung besteht, und
die Harzschicht und die faserverstärkte Harzschicht auf die Metallschicht laminiert sind, die zuvor unter Spannung gesetzt worden ist.

3. Verbundmaterial nach Anspruch 1, wobei
das faserverstärkte Harzschichtteil n Platten aus faserverstärkten Harzschichten enthält und
die faserverstärkten Harzschichten so laminiert sind, dass der minimale Winkel zwischen den faserverstärkten Harzschichten in einer Richtung der Faseranordnungen 180/n Grad beträgt.

4. Verbundmaterial nach Anspruch 2, wobei
das faserverstärkte Harzschichtteil n Platten aus faserverstärkten Harzschichten enthält und
die faserverstärkten Harzschichten so laminiert sind, dass der minimale Winkel zwischen den faserverstärkten Harzschichten in einer Richtung der Faseranordnungen 180/n Grad beträgt.

5. Verbundmaterial nach Anspruch 1, wobei
das faserverstärkte Harzschichtteil enthält:
eine erste faserverstärkte Harzschicht, in der die Fasern so angeordnet sind, dass sie sich quer zur einer bestimmten Richtung der Metallschicht erstrecken,
eine zweite faserverstärkte Harzschicht, die auf die erste faserverstärkte Harzschicht laminiert ist und in der die Fasern so angeordnet sind, dass sie sich in einem Winkel von -45 Grad in Bezug auf eine bestimmte Richtung der Metallschicht erstrecken,
eine dritte faserverstärkte Harzschicht, die auf die zweite faserverstärkte Harzschicht laminiert ist und in der die Fasern so angeordnet sind, dass sie sich in einer bestimmten Richtung der Metallschicht erstrecken, und
eine vierte faserverstärkte Harzschicht, die auf die dritte faserverstärkte Harzschicht laminiert ist und in der die Fasern so angeordnet sind, dass sie sich in einem Winkel von 45 Grad in Bezug auf eine bestimmte Richtung der Metallschicht erstrecken.

6. Verbundmaterial nach Anspruch 2, wobei
das faserverstärkte Harzschichtteil enthält:
eine erste faserverstärkte Harzschicht, in der die Fasern so angeordnet sind, dass sie sich quer zur einer bestimmten Richtung der Metallschicht erstrecken,
eine zweite faserverstärkte Harzschicht, die auf die erste faserverstärkte Harzschicht laminiert ist und in der die Fasern so angeordnet sind, dass sie sich in einem Winkel von -45 Grad in Bezug auf eine bestimmte Richtung der Metallschicht erstrecken,
eine dritte faserverstärkte Harzschicht, die auf die zweite faserverstärkte Harzschicht laminiert ist und in der die Fasern so angeordnet sind, dass sie sich in einer bestimmten Richtung der Metallschicht erstrecken, und
eine vierte faserverstärkte Harzschicht, die auf die dritte faserverstärkte Harzschicht laminiert ist und in der die Fasern so angeordnet sind, dass sie sich in einem Winkel von 45 Grad in Bezug auf eine bestimmte Richtung der Metallschicht erstrecken.

7. Verbundmaterial nach Anspruch 3 oder Anspruch 4, wobei das faserverstärkte Harzschichtteil enthält:
eine erste faserverstärkte Harzschicht, in der die Fasern so angeordnet sind, dass sie sich quer zur einer bestimmten Richtung der Metallschicht erstrecken,
eine zweite faserverstärkte Harzschicht, die auf die erste faserverstärkte Harzschicht laminiert ist und in der die Fasern so angeordnet sind, dass sie sich in einem Winkel von -45 Grad in Bezug auf eine bestimmte Richtung der Metallschicht erstrecken,
eine dritte faserverstärkte Harzschicht, die auf die zweite faserverstärkte Harzschicht laminiert ist und in der die Fasern so angeordnet sind, dass sie sich in einer bestimmten Richtung der Metallschicht erstrecken, und
eine vierte faserverstärkte Harzschicht, die auf die dritte faserverstärkte Harzschicht laminiert ist und in der die Fasern so angeordnet sind, dass sie sich in einem Winkel von 45 Grad in Bezug auf eine bestimmte Richtung der Metallschicht erstrecken.

8. Verfahren zur Herstellung eines Verbundmaterials, welches umfasst:
Unter-Spannung-Setzen einer Folie aus einer Formgedächtnis-Legierung,
Laminieren einer Harzschicht auf jede Seite der Folie aus der Formgedächtnis-Legierung,
Laminieren mehrerer nicht gehärteter faserverstärkter Harzschichten auf die Harzschicht,
Befestigen beider Enden der Folie aus der Formgedächtnis-Legierung, um zu verhindern, dass sich die Länge der Folie ändert, und
Erhitzen der Folie aus der Formgedächtnis-Legierung, um die Harzschicht und die faserverstärkten Harzschichten auszuhärten.

## Revendications

1. Matériau composite comprenant :
une partie de couche de résine renforcée par des fibres comprenant une pluralité de couches de résine renforcée par des fibres dans différentes directions d'agencement de fibres, les couches étant stratifiées les unes avec les autres ;
une couche métallique faite d'un matériau métallique structurel, qui est disposée entre les parties de couche de résine en résine renforcée par des fibres ; et
une couche de résine qui attache la couche métallique et la couche de résine renforcée par des fibres entre elles.

2. Matériau composite selon la revendication 1, dans lequel
la couche métallique est faite d'un alliage à mémoire de forme; et
la couche de résine et la partie de couche de résine renforcée par des fibres sont stratifiées sur la couche métallique à laquelle une contrainte est conférée au préalable.

3. Matériau composite selon la revendication 1, dans lequel
la partie de couche de résine renforcée par des fibres comprend n feuilles de couches de résine renforcée par des fibres ; et
les couches de résine renforcée par des fibres sont stratifiées de telle sorte qu'un angle minimal entre les couches de résine renforcée par des fibres dans une direction d'agencement de fibres soit de 180/n degrés.

4. Matériau composite selon la revendication 2, dans lequel
la partie de couche de résine renforcée par des fibres comprend n feuilles de couches de résine renforcée par des fibres ; et
les couches de résine renforcée par des fibres sont stratifiées de telle sorte qu'un angle minimal entre les couches de résine renforcée par des fibres dans une direction d'agencement de fibres soit de 180/n degrés.

5. Matériau composite selon la revendication 1, dans lequel la partie de couche renforcée par des fibres comprend :
une première couche de résine renforcée par des fibres dans laquelle des fibres sont agencées pour s'étendre de façon perpendiculaire à une certaine direction de la couche métallique,
une deuxième couche de résine renforcée par des fibres stratifiée sur la première couche de résine renforcée par des fibres, dans laquelle des fibres sont agencées pour s'étendre à un angle de -45 degrés par rapport à une certaine direction de la couche métallique,
une troisième couche de résine renforcée par des fibres stratifiée sur la deuxième couche de résine renforcée par des fibres, dans laquelle des fibres sont agencées pour s'étendre le long d'une certaine direction de la couche métallique, et
une quatrième couche de résine renforcée par des fibres stratifiée sur la troisième couche de résine renforcée par des fibres, dans laquelle des fibres sont agencées pour s'étendre à un angle de 45 degrés par rapport à une certaine direction de la couche métallique.

6. Matériau composite selon la revendication 2, dans lequel la partie de couche de résine renforcée par des fibres comprend :
une première couche de résine renforcée par des fibres dans laquelle des fibres sont agencées pour s'étendre de façon perpendiculaire à une certaine direction de la couche métallique,
une deuxième couche de résine renforcée par des fibres stratifiée sur la première couche de résine renforcée par des fibres, dans laquelle des fibres sont agencées pour s'étendre à un angle de -45 degrés par rapport à une certaine direction de la couche métallique,
une troisième couche de résine renforcée par des fibres stratifiée sur la deuxième couche de résine renforcée par des fibres, dans laquelle des fibres sont agencées pour s'étendre le long d'une certaine direction de la couche métallique, et
une quatrième couche de résine renforcée par des fibres stratifiée sur la troisième couche de résine renforcée par des fibres, dans laquelle des fibres sont agencées pour s'étendre à un angle de 45 degrés par rapport à une certaine direction de la couche métallique.

7. Matériau composite selon la revendication 3 ou 4, dans lequel la partie de couche de résine renforcée par des fibres comprend :
une première couche de résine renforcée par des fibres dans laquelle des fibres sont agencées pour s'étendre de façon perpendiculaire à une certaine direction de la couche métallique,
une deuxième couche de résine renforcée par des fibres stratifiée sur la première couche de résine renforcée par des fibres, dans laquelle des fibres sont agencées pour s'étendre à un angle de -45 degrés par rapport à une certaine direction de la couche métallique,
une troisième couche de résine renforcée par des fibres stratifiée sur la deuxième couche de résine renforcée par des fibres, dans laquelle des fibres sont agencées pour s'étendre le long d'une certaine direction de la couche métallique, et
une quatrième couche de résine renforcée par des fibres stratifiée sur la troisième couche de résine renforcée par des fibres, dans laquelle des fibres sont agencées pour s'étendre à un angle de 45 degrés par rapport à une certaine direction de la couche métallique.

8. Procédé de fabrication d'un matériau composite qui comprend :
conférer une contrainte à une feuille en alliage à mémoire de forme ;
stratifier une couche de résine sur chaque surface de la feuille en alliage à mémoire de forme ;
stratifier une pluralité de couches de résine renforcée par des fibres non durcies sur la couche de résine ;
fixer les deux extrémités de la feuille en alliage à mémoire de forme pour empêcher qu'une longueur de la feuille soit changée ; et
chauffer la feuille en alliage à mémoire de forme afin de durcir la couche de résine et les couches de résine renforcée par des fibres.
